# DEMANDE DE BREVET EUROPEEN

(11) **EP 2 433 498 A2**
(43) Date de publication de la demande: **28.03.2012**
(21) Numéro de dépôt: 11182056.9
(22) Date de dépôt: 20.09.2011
(51) Int. Cl.: A01N 59/02, A01N 25/00, A01C 1/06, A01P 17/00

(54) **Procédé pour fabriquer des graines ayant un effet répulsif envers les oiseaux et graine associée obtenue par le procédé**

(30) Priorité: 22.09.2010 FR 1057618
(71) Demandeur: Lepretre, Didier, 18340 Sennecay (FR)
(72) Inventeur: Lepretre, Didier, 18340 Sennecay (FR)
(74) Mandataire: Marconnet, Sébastien

(57) **Abrégé**

L'invention concerne essentiellement un procédé pour fabriquer des graines ayant un effet répulsif envers les oiseaux caractérisé en ce qu'il comporte l'étape de recouvrir les graines (1) de particules de soufre. A cet effet, on dissout un produit (2) à base de soufre dans une solution (3) aqueuse afin d'obtenir une solution (4) de traitement, et on pulvérise la solution (4) de traitement sur les graines (1) ou on mélange ensemble les graines (1) et la solution (4) de traitement. L'invention concerne en outre la graine obtenue par le procédé selon l'invention.

## Description

**DOMAINE TECHNIQUE DE L'INVENTION**

L'invention concerne un procédé pour fabriquer des graines ayant un effet répulsif envers les oiseaux ainsi que la graine associée obtenue par le procédé. L'invention trouve une application particulièrement avantageuse, mais non exclusive, avec des graines de maïs, tournesol, soja, pois et autres céréales.

**ETAT DE LA TECHNIQUE**

Pour la culture du maïs ou des autres céréales précitées, l'agriculteur sème des graines dans son champ à l'intérieur de sillons ménagés dans le sol. Or il n'est pas rare que les oiseaux comme les corbeaux ou les pigeons viennent manger les graines qui ont été semées, ce qui engendre des pertes économiques non négligeables pour l'agriculteur.

Et même lorsque l'on cherche à camoufler les sillons dans lesquels les graines ont été semées, on observe que les oiseaux arrivent quand même à les trouver pour les manger.

Les documents cités XP002632274, CN1391806, US2007/071833, et US2417115 décrivent l'utilisation d'une solution de soufre sous forme de poudre pour traiter les graines.

Les documents XP002632275, JP4270206, et XP000917354 décrivent l'utilisation de soufre pour repousser les oiseaux mais le soufre n'est pas pulvérisé sur une graine.

Le document US6139857 décrit l'utilisation du soufre pour repousser des rongeurs ou de la vermine. L'effet répulsif du soufre envers les oiseaux n'est pas mentionné dans ce document.

Les documents XP002632276, JP51047769, JP2006257017 décrivent l'utilisation de composés autres que le soufre pour repousser les oiseaux.

Les documents FR2599592 et FR2374852 décrivent l'utilisation du soufre micronisé en tant que fongicides pour traiter les plantes.

Toutefois, aucun des documents cités ne décrit, ni ne suggère, de mélanger les graines à une solution aqueuse contenant du soufre afin d'obtenir des graines ayant un effet répulsif sur les oiseaux, comme cela est présentement revendiqué. En outre, aucun de ces documents ne décrit l'obtention d'une graine recouverte d'un produit à base de soufre contenant au moins 80% de matière active. En effet, dans le document US2417115, ce taux est au maximum de 25% comme indiqué à la fin du document.

L'invention a pour but la fabrication de graines de céréales, en particulier les graines de maïs, ayant un effet répulsif envers ces oiseaux.

**OBJET DE L'INVENTION**

L'invention part de la constatation que lorsque les graines sont enduites d'un produit à base de soufre, dont l'utilisation est connue par ailleurs comme fongicide pour les plantes de type vignes par exemple, les oiseaux ne viennent plus manger les graines qui ont été semées ou les petites pousses qui en sont issues.

L'invention concerne donc un procédé pour fabriquer des graines ayant un effet répulsif envers les oiseaux caractérisé en ce qu'il comporte l'étape de recouvrir les graines de particules de soufre.

Selon une mise en oeuvre, pour recouvrir les graines de particules de soufre,
- on dissout un produit à base de soufre dans une solution aqueuse afin d'obtenir une solution de traitement,
- on pulvérise la solution de traitement sur les graines ou on mélange ensemble les graines et la solution de traitement.

Selon une mise en oeuvre, le produit à base de soufre contient au moins 80% de matière active.

Selon une mise en oeuvre, le produit à base de soufre contient du soufre micronisé.

Selon une mise en oeuvre, le produit à base de soufre se présente sous forme de poudre mouillable ou en solution aqueuse.

Selon une mise en oeuvre, pour obtenir la solution de traitement, on dissout au maximum 800 grammes de produit à base de soufre par litre de solution aqueuse.

Selon une mise en oeuvre, on pulvérise un litre de solution de traitement par quintal de graines.

Selon une mise en oeuvre, la solution aqueuse est de l'eau.

Selon une mise en oeuvre, on mélange les graines et la solution de traitement à l'aide d'une bétonnière ou d'une vis à grain.

Selon une mise en oeuvre, pour pulvériser la solution de traitement sur les graines, on utilise des pulvérisateurs installés sur une station de semences.

Selon une mise en oeuvre, les étapes de mélange ou de pulvérisation de la solution de traitement sur les graines sont réalisées avant que les graines soient conditionnées.

L'invention concerne en outre une graine ayant un effet répulsif envers les oiseaux caractérisée en ce que la graine est recouverte de particules de soufre.

**BREVE DESCRIPTION DES FIGURES**

L'invention sera mieux comprise à la lecture de la description qui suit et à l'examen des figures qui l'accompagnent. Ces figures ne sont données qu'à titre illustratif mais nullement limitatif de l'invention. Elles montrent :

Figure 1 : une représentation schématique des différentes étapes du procédé selon l'invention permettant d'obtenir la solution de traitement ;

Figure 2 : une représentation schématique des étapes du procédé selon l'invention lors de la pulvérisation, dans une station de semences, de la solution de traitement sur les graines ;

Figure 3 : une représentation schématique des étapes du procédé selon l'invention lorsque le mélange de la solution de traitement et des graines est réalisé à l'aide d'une bétonnière ;

Figure 4 : une représentation schématique de la graine selon l'invention recouverte de particules de soufre.

Les éléments identiques, similaires ou analogues conservent la même référence d'une figure à l'autre.

**DESCRIPTION D'EXEMPLES DE REALISATION DE L'INVENTION**

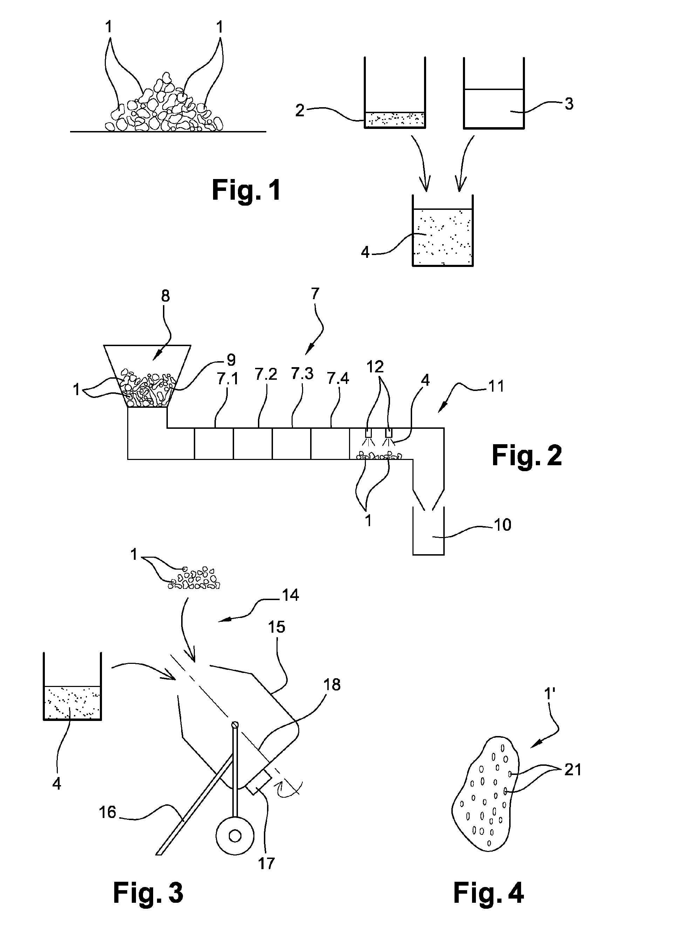

La figure 1 montre des graines 1 de céréales pouvant être par exemple des graines de maïs, tournesol, soja, pois ou autre. Par « graine » on entend, au sens du dictionnaire *« Le Petit Larousse illustré Edition* 1997 », un organe dormant enfermé dans un fruit et qui, après dispersion et germination, donne une nouvelle plante.

Dans une première étape du procédé selon l'invention, on dissout un produit 2 à base de soufre dans une solution 3 aqueuse afin d'obtenir une solution 4 de traitement. Le produit 2 contient au minimum 80% de matière active (soufre). Le produit 2 est un produit à base de soufre dit « micronisé ». Par « micronisé », on entend la réduction d'un corps solide en particules de l'ordre du micron. Le produit 2 se présente de préférence sous forme de poudre mouillable ou en solution aqueuse. Le produit 2 utilisé pourra par exemple être le produit de type microthiol de chez « CEREXAGRI SAS » (marque déposée).

La solution 3 aqueuse est de préférence de l'eau du robinet par exemple. En variante, la solution 3 est une solution contenant d'autres produits que le produit 2 à base de soufre, comme par exemple des pesticides ou des fongicides qui permettent de traiter les graines 1 contre les maladies et les parasites.

Pour obtenir la solution 4 de traitement, on dissout au maximum 800 grammes de produit 2 par litre de solution 3. De préférence, on dissout sensiblement 800 grammes de produit 2 par litre de solution 3.

La figure 2 montre une station 7 de semences permettant de façon connue de trier et de traiter des graines à l'aide de divers dispositifs (nettoyeurs, trieurs, calibreurs, appareil de traitement) référencés 7.1-7.4 sur la figure. Ainsi à partir d'un produit 8 brut formés par des graines 1 non traitées et des déchets 9 de type pailles, cailloux ou terres, la station 7 de semence permet d'obtenir des graines triées et traitées qui seront prêtes pour l'emballage 10 final.

Conformément à l'invention, on pourra installer dans une zone 11 de la station de semences des pulvérisateurs 12 qui pourront, en plus des produits traditionnellement pulvérisés sur les graines pour leur traitement, pulvériser la solution 4 sur les graines 1. De préférence, un litre de solution 4 de traitement est pulvérisé par quintal de graines 1.

La Figure 3 montre une bétonnière 14 comportant une cuve 15 montée sur un châssis 16 muni de roues ainsi qu'un moteur 17 apte à entraîner en rotation la cuve 15 autour de son axe 18. Pour enduire les graines de particules de soufre, on mélange les graines 1 et la solution 4 dans la cuve 15 et on active ensuite le moteur 17 pour que le mélange devienne homogène. Ensuite, il suffit de faire sécher les graines 1 ainsi enduites de particules de soufre.

Comme précédemment, on utilisera de préférence un litre de solution 4 de traitement par quintal de graines.

En variante, on peut remplacer la bétonnière 14 par un système de vis à grain (non représenté).

Le mélange de la solution 4 avec les graines 1 à l'aide de la bétonnière 14 ou de la vis à grain est particulièrement bien adapté pour les semences de ferme.

La Figure 4 montre une représentation schématique d'une graine 1' obtenue par le procédé selon l'invention. Cette graine 1' est recouverte de particules 21 de soufre contenues dans le produit 2 à base de soufre. Lorsque cette graine 1' est semée par l'agriculteur, il a été observé qu'elle présente un effet répulsif envers les oiseaux.

## Revendications

1. Procédé pour fabriquer des graines ayant un effet répulsif envers les oiseaux **caractérisé en ce qu'**il comporte les étapes suivantes :
- on dissout un produit (2) à base de soufre dans une solution (3) aqueuse afin d'obtenir une solution (4) de traitement, et
- on pulvérise la solution (4) de traitement sur les graines (1) ou on mélange ensemble les graines (1) et la solution (4) de traitement.

2. Procédé selon la revendication 1, **caractérisé en ce que** le produit (2) à base de soufre contient au moins 80% de matière active.

3. Procédé selon la revendication 1 ou 2, **caractérisé en ce que** le produit (2) à base de soufre contient du soufre micronisé.

4. Procédé selon la revendication 3, **caractérisé en ce que** le produit (2) à base de soufre se présente sous forme de poudre mouillable ou en solution aqueuse.

5. Procédé selon l'une des revendications 1 à 4, **caractérisée en ce que** pour obtenir la solution (4) de traitement, on dissout au maximum 800 grammes de produit à base de soufre par litre de solution (3) aqueuse.

6. Procédé selon l'une des revendications 1 à 5, **caractérisé en ce que** on pulvérise un litre de solution (4) de traitement de graines (1).

7. Procédé selon l'une des revendications 1 à 6, **caractérisé en ce que** la solution (3) aqueuse est de l'eau.

8. Procédé selon l'une des revendications 1 à 7, **caractérisé en ce que** on mélange les graines (1) et la solution (4) de traitement à l'aide d'une bétonnière (14) ou d'une vis à grain.

9. Procédé selon l'une des revendications 1 à 8, **caractérisé en ce que** pour pulvériser la solution (4) de traitement sur les graines (1), on utilise des pulvérisateurs (12) installés sur une station (7) de semences.

10. Procédé selon l'une des revendications 1 à 9, **caractérisé en ce que** les étapes de mélange ou de pulvérisation de la solution (4) de traitement sur les graines (1) sont réalisées avant que les graines (1) soient conditionnées.

11. Graine (1') ayant un effet répulsif envers les oiseaux **caractérisée en ce que** la graine (1') est recouverte d'un produit (2) à base de soufre contenant au moins 80% de matière active.
